# FASCICULE DE BREVET EUROPEEN

(11) **EP 2 014 972 B1**
(45) Date de publication et mention de la délivrance du brevet: **11.06.2014**
(21) Numéro de dépôt: 08159888.0
(22) Date de dépôt: 08.07.2008
(51) Int. Cl.: F21V 29/00, F21V 31/03, B60Q 1/00, F21S 8/10

(54) **Dispositif de traitement de l'humidité présente à l'intérieur d'un projecteur de véhicule automobile, et projecteur muni d'un tel dispositif**
Vorrichtung zur Behandlung von Feuchtigkeit im Innern eines Kraftfahrzeug-Scheinwerfers und mit einer solchen Vorrichtung ausgestatteter Scheinwerfer
Device for treating moisture inside the headlight of an automobile, and headlight equipped with such a device

(30) Priorité: 13.07.2007 FR 0705104
(43) Date de publication de la demande: 14.01.2009
(73) Titulaire: VALEO VISION, 93012 Bobigny (FR)
(72) Inventeur: Puente, Jean-Claude, 93190 Livry Gargan (FR); Albou, Pierre, 75013 Paris (FR)

(56) Documents cités:
- EP-A- 1 718 127
- DE-A1- 10 213 680
- DE-A1- 10 255 443
- DE-A1- 10 319 363
- DE-A1- 10 331 835
- DE-A1- 10 343 015
- DE-A1- 10 346 070
- DE-A1- 10 346 270
- DE-A1-102005 060 736
- JP-A- 2005 190 825

## Description

L'invention est du domaine des dispositifs d'éclairage et/ou de signalisation pour véhicule automobile, projecteur d'un faisceau lumineux ou appareil analogue. Plus particulièrement, elle a pour objet un dispositif destiné à équiper un tel projecteur pour traiter l'humidité qu'il est susceptible de contenir, et un projecteur muni d'un tel dispositif.

Les projecteurs pour automobile sont principalement constitués d'un boîtier ménageant une chambre de lumière qui loge en son fond une source lumineuse, telle que diode électroluminescente ou lampe à décharge par exemple. Le boîtier et plus particulièrement la chambre, est fermé à l'avant par une glace de fermeture constituant une paroi transparente, qui autorise l'émergence à son travers de la lumière produite par la source lumineuse. Des organes optiques, tel qu'un réflecteur ou appareil analogue, sont placés à l'intérieur de la chambre pour la formation d'un faisceau lumineux à partir de la lumière produite par la source lumineuse. Le boîtier loge aussi des accessoires et/ou des moyens complémentaires nécessaires au fonctionnement du projecteur, tels que des organes électroniques de commande du fonctionnement de la source lumineuse et/ou des moyens pour sa mobilité, composants électroniques, câblage ou appareillage analogue par exemple. De tels accessoires et moyens complémentaires sont réputés inesthétiques, et sont en conséquence logés à l'intérieur d'un compartiment intérieur ménagé à la base du boîtier. Également, l'accès visuel direct à la paroi du boîtier nuit souvent à l'aspect d'ensemble du projecteur car il est souvent conçu dans un matériau peu esthétique. Pour empêcher un accès visuel extérieur à ces moyens complémentaires et/ou à la paroi interne du boîtier à travers la glace de fermeture, un masque interne est placé à la base de la glace de fermeture en coiffant le compartiment.

Le boîtier est organisé de manière à être étanche à l'encontre d'une infiltration d'eau, tel qu'eau de ruissellement, tout en étant perméable à l'air pour autoriser une ventilation de son volume intérieur. Cette ventilation est rendue nécessaire en raison de la chaleur produite par la source lumineuse, ce qui nécessite d'équilibrer la pression entre l'intérieur du boîtier et l'extérieur. De telles étanchéité et perméabilité du boîtier sont par exemple obtenues au moyen d'un dispositif du type à labyrinthe, à chicane ou moyens de type analogue.

Se pose le problème du traitement optimisé de l'humidité présente à l'intérieur du boîtier, d'autant plus que les ventilations empêchent une étanchéité totale du boîtier. L'air entrant par la ventilation du boîtier pouvant être plus ou moins chargé d'humidité, ce qui est susceptible d'altérer les organes que contient le boîtier et d'occasionner une condensation sur la glace de fermeture. Cette condensation se produit en raison de la température de la glace de fermeture, qui se trouve être plus froide que l'air contenu à l'intérieur du boîtier en raison de la chaleur produite par la source lumineuse en fonctionnement. De la buée se forme à la surface de la paroi interne de la glace de fermeture, ce qui est préjudiciable à la formation du faisceau lumineux et ce qui est inesthétique, voire induit un sentiment d'insatisfaction pour l'usager.

La condensation de l'humidité sur la glace de fermeture n'est pas souhaitable non seulement lorsque le projecteur est en fonctionnement, mais aussi lorsque le véhicule est à l'arrêt et que la source lumineuse est éteinte. Pour éviter la formation de buée sur la glace de fermeture, il a été proposé de chauffer la glace de fermeture. Un tel chauffage est par exemple réalisé en intégrant dans la glace de fermeture des organes chauffants, tels que résistances, électrodes, film chauffant ou organes chauffants analogues. De telles dispositions présentent les inconvénients d'altérer les qualités optiques de la glace de fermeture pour la projection du faisceau lumineux, d'induire un accroissement inopportun du coût de la glace de fermeture et de générer une consommation électrique importante. Une telle consommation électrique est à éviter, et restreint en outre les possibilités offertes pour la mise en oeuvre des organes chauffants, notamment lorsque le véhicule est à l'arrêt.

Pour éviter une telle consommation d'énergie, il a été proposé d'exploiter la chaleur produite par la source lumineuse pour chauffer la glace de fermeture, tel que décrit par DE10255443 (HELLA KG HUECK & CO ; DAIMLER-CHRYLER AG). Un flux d'air chaud généré par la chaleur présente dans la chambre est dirigé vers la face interne de la glace de fermeture de manière à la balayer. De telles dispositions restent insatisfaisantes dans la mesure où leur mise en oeuvre est soumise à la récupération de la chaleur produite par la source lumineuse, et en conséquence est susceptible de ne pas pouvoir répondre aux besoins lorsque cette chaleur produite est insuffisante, voire inexistante. Une telle solution est plutôt applicable à un type restreint de source lumineuse susceptible de produire une chaleur suffisante, telle qu'une lampe à décharge. En outre, la formation de passages du flux d'air chaud à travers le masque porte atteinte à sa fonction première d'avoir à cacher les moyens complémentaires du projecteur et en conséquence à l'esthétique du projecteur.

La réduction de l'humidité présente dans l'air contenu à l'intérieur du boîtier peu être obtenue en provoquant sa condensation et en évacuant les condensats, résultant de cette condensation, tel que décrit par DE 10213680 (HELLA KG) ou bien par DE10319363 (VOLKSWAGEN AG). Une unité thermoélectrique à effet PELTIER est placée dans le compartiment et sa face productrice de froid est en relation avec un organe de condensation de l'humidité et d'évacuation des condensats hors du compartiment. L'unité thermoélectrique est activée en fonction des conditions atmosphériques, pluie ou température extérieure notamment. L'utilisation d'une unité thermoélectrique est satisfaisante au regard de la faible consommation d'énergie nécessaire pour sa mise en oeuvre. Cependant, de telles dispositions consistant à provoquer une condensation dans une zone dédiée du compartiment sont insuffisantes pour garantir une préservation de la glace de fermeture de toute buée. Ces dispositions ne permettent pas d'obtenir un désembuage rapide et efficace de la glace de fermeture, et les modalités de mise en oeuvre de l'unité thermoélectrique ne répondent pas aux attentes des usagers, notamment au regard de leur sentiment de satisfaction. Les modalités d'organisation de l'organe de condensation de l'humidité et d'évacuation des condensats hors du compartiment induisent un accroissement inopportun de l'encombrement du compartiment, ce qui est à éviter.

Les solutions existantes pour le désembuage de la glace de fermeture et/ou pour réduire le taux d'humidité à l'intérieur du projecteur ne sont pas satisfaisantes au regard de la globalité des exigences relatives essentiellement à un coût d'obtention et/ou de fonctionnement limités du dispositif mis en oeuvre, à son encombrement restreint, et à un désembuage de la glace de fermeture qui soit obtenu rapidement et selon des modalités potentielles de fonctionnement optimisées.

Le but de la présente invention est de proposer un dispositif de traitement de l'humidité présente à l'intérieur d'un projecteur d'un véhicule automobile, qui permette de répondre de manière satisfaisante à la globalité des problèmes posés et des résultats à atteindre. Il est plus particulièrement visé par la présente invention de proposer un tel dispositif qui permette de désembuer rapidement et efficacement la glace de fermeture, y compris en l'absence de fonctionnement de la source lumineuse et/ou d'arrêt du véhicule en station de garage. Il est aussi visé par la présente invention de proposer un tel dispositif qui n'induise pas un accroissement conséquent de l'encombrement du boîtier, qui soit à faible consommation d'énergie, et qui permette en outre une évacuation de l'humidité résiduelle hors du boîtier indépendamment de l'opération visant spécifiquement à désembuer rapidement la glace de fermeture. Il est aussi préférentiellement recherché de permettre un désembuage de la paroi transparente sans avoir à affecter l'aspect et l'esthétique de son environnement à l'intérieur du boîtier, en évitant d'altérer le masque.

Le dispositif de la présente invention est un dispositif de traitement de l'humidité à l'intérieur d'un projecteur de véhicule automobile. Le projecteur comprend un boîtier ménageant une chambre logeant une source lumineuse et un compartiment. Une glace de fermeture ferme ledit boîtier. Un masque est disposé à proximité de la glace de fermeture et coiffe le compartiment. C'est-à-dire que soit le masque est en contact avec la glace de fermeture, soit présente un faible jeu avec elle, pour empêcher un accès visuel aux éléments situés en dessous du masque. Le dispositif comprend des moyens de chauffage qui sont aptes à réchauffer la glace de fermeture et dont la mise en oeuvre est placée sous la dépendance de moyens de commande.

Selon la présente invention, le compartiment loge les moyens de chauffage, qui sont en relation avec une première plaque thermiquement conductrice placée à proximité de la glace de fermeture, de manière à ce que la face interne de la glace de fermeture soit balayée par un courrant de chaleur en provenance de la première plaque réchauffée par les moyens de chauffage électrique. Préférentiellement, les moyens de chauffage électriques sont aptes à être activés indépendamment de ladite source lumineuse, ou des sources lumineuses lorsqu'il y en a plusieurs. Ainsi, ces moyens de chauffage électriques peuvent être activés, même lorsque les sources lumineuses sont éteintes. Ceci permet par exemple au dispositif de dégivrer la glace du projecteur, avant même que les projecteurs soient allumés, ou bien par exemple, de traiter l'humidité des projecteurs, que ceux-ci soient allumés ou éteints. Préférentiellement, le courrant de chaleur est essentiellement généré par convection.

La nature électrique des moyens de chauffage permet leur mise en oeuvre suivant de quelconques modalités de fonctionnement, indépendamment de l'activation ou non de la source lumineuse. Leur disposition à l'intérieur du compartiment permet de préserver la glace de fermeture en évitant d'altérer ses qualités optiques et de complexifier sa structure. La chaleur fournie par les moyens de chauffage électriques est diffusée par rayonnement et convection de manière optimisée, grâce à l'exploitation d'une surface potentiellement étendue offerte par la première plaque.

Préférentiellement, le compartiment est agencé à la base du boîtier en contrebas de ladite glace de fermeture, ledit masque étant disposé à la base de la glace de fermeture, et ladite première plaque thermiquement conductrice étant placée à la base de la glace de fermeture, de sorte que la face interne de la glace de fermeture est balayée par un courrant de chaleur de convection ascendant.

Selon diverses variantes de réalisation, la première plaque est constituée indifféremment du masque ou d'une plaque spécifiquement dédiée disposée sous le masque. Le cas échéant, le masque est susceptible d'être perméable à l'air pour favoriser l'établissement d'une cellule de convection et la traversée du masque par l'air chaud en provenance de la première plaque située sous le masque.

La première plaque est plus particulièrement disposée dans son plan général suivant une orientation parallèle à l'axe optique ou préférentiellement effectuant un angle compris entre 4 et 8 degrés avec l'axe optique du projecteur et penchant vers le bas en direction de la glace de fermeture.

L'extension de la glace de fermeture étant communément courbe, l'orientation de la plaque permet non seulement d'éviter un accroissement inopportun de l'encombrement du boîtier, mais aussi de favoriser la diffusion de la chaleur sur la totalité de la surface interne de la glace de fermeture qui s'étend en surplomb de la première plaque.

Les moyens de commande sont susceptibles de comprendre divers moyens de détection, tels que l'humidité et/ou la température présentent à l'intérieur et/ou à l'extérieur du boîtier, voire divers paramètres relatifs aux conditions climatiques. Il est cependant proposé de munir les moyens de commande de moyens de temporisation pour mettre en oeuvre les moyens de chauffage de manière fiable pendant un durée postérieure à l'activation et/ou à la désactivation de la source lumineuse.

Plus particulièrement, les moyens de commande comprennent des premiers moyens de temporisation qui sont aptes à maintenir voire provoquer l'activation des moyens de chauffage pendant une première durée prédéterminée postérieure à la désactivation de la source lumineuse. Ces dispositions visent à maintenir l'opération de désembuage de la glace de fermeture après la désactivation de la source lumineuse, pour éviter que la glace de fermeture ne soit embuée lorsque le véhicule est à l'arrêt après utilisation et finalement pour éviter qu'un sentiment d'insatisfaction ne soit induit chez l'usager.

Plus particulièrement encore, les moyens de commande comprennent des deuxièmes moyens de temporisation qui sont aptes à provoquer voire maintenir l'activation des moyens de chauffage en conséquence d'une activation de la source lumineuse.

Les deuxièmes moyens de temporisation sont notamment associés à des moyens de régulation, qui sont aptes à activer les moyens de chauffage à forte puissance pendant une deuxième durée prédéterminée, puis si besoin à maintenir l'activation des moyens de chauffage à température modérée. Ces dispositions sont telles que le désembuage obtenu de la glace de fermeture est rapide dès l'activation de la source lumineuse.

Les moyens de chauffage électriques sont susceptibles d'être de structures diverses, tel qu'électrodes, film chauffant, résistances ou organes analogues aptes à être rapportés sur ou intégrés à la première plaque. Cependant, et selon un autre aspect de la présente invention, les moyens de chauffage sont associés à des moyens de formation d'une condensation sur une paroi froide constitutive du dispositif, pour optimiser le traitement de l'humidité présente à l'intérieur du boîtier en provoquant sa condensation sur la paroi froide.

A cet effet, les moyens de chauffage sont selon l'invention constitués d'au moins une unité thermoélectrique à effet PELTIER dont la face chaude est exploitée pour constituer les moyens de chauffage, et est en relation, par conduction notamment, avec la première plaque.

La face froide de l'unité thermoélectrique est exploitée pour le refroidissement de la paroi froide, et est en relation, par conduction notamment, avec une deuxième plaque thermiquement conductrice. Cette deuxième plaque forme au moins partiellement une paroi froide qui est apte à provoquer une condensation à sa surface pour réduire le taux d'humidité présente à l'intérieur du projecteur.

La deuxième plaque est formée indifféremment d'une masse métallique ou d'une enveloppe logeant un fluide caloporteur. La première plaque est quant à elle formée indifféremment à partir d'un matériau métallique ou d'un matériau plastique chargé de particules métalliques ou analogues aptes à le rendre thermiquement conducteur.

La première plaque et la deuxième plaque sont préférentiellement orientées pour éviter d'accroître l'encombrement du dispositif. Préférentiellement, elles sont orientées environ parallèlement. Par exemple, lorsque la deuxième plaque est horizontale, la première plaque effectue un angle d'environ cinq degrés avec la deuxième plaque. Pour permettre néanmoins d'éloigner la paroi froide de la première plaque, afin d'optimiser et de fiabiliser son efficacité, l'unité thermoélectrique est logée dans une enceinte dont les parois sont thermiquement isolantes. Cette enceinte permet d'optimiser l'exploitation des températures respectivement fournies par l'une et l'autre des faces de l'unité thermoélectrique, en enveloppant la deuxième plaque dans sa majeure partie et en dégageant l'extrémité de la deuxième plaque qui est éloignée de la première plaque et qui forme la paroi froide. Selon ces dispositions, l'évacuation des condensats peut en outre être aisément obtenue, en formant des canaux ménagés à travers la deuxième plaque suivant son épaisseur, dans sa zone correspondante à la paroi froide. La traversée de la deuxième plaque par les canaux leur confère une aptitude à autoriser un écoulement par gravité des condensats à travers la paroi froide pour leur acheminement vers des moyens d'évacuation d'eau dont est muni l'enceinte. Ces moyens d'évacuation d'eau sont avantageusement constitutifs de moyens de ventilation équipant le projecteur, tel que du type à labyrinthe ou à chicane, ou tout autre appareillage analogue autorisant un passage de l'air à l'intérieur du boîtier et interdisant néanmoins l'infiltration d'eau, eau de ruissellement notamment.

Plus particulièrement, l'unité thermoélectrique est logée à l'intérieur d'une enceinte dont les parois sont thermiquement isolantes. La face chaude de l'unité thermoélectrique est placée au débouché d'une ouverture de l'enceinte, qui est fermée par la première plaque pour mettre en contact la face chaude de l'unité thermoélectrique avec la première plaque en vue de son réchauffement par conduction.

Une première zone de la deuxième plaque est de préférence logée entre des parois de l'enceinte, tandis que la paroi froide émerge hors de l'enceinte. La première plaque et la deuxième plaque étant sensiblement orientées parallèlement, l'écart entre la paroi froide et la première plaque est susceptible d'être conséquent sans pour autant induire un accroissement de l'encombrement du boîtier, et plus particulièrement de l'épaisseur du compartiment logeant l'enceinte.

Plus particulièrement encore, la deuxième plaque est disposée dans son plan général suivant une orientation correspondante à l'axe optique du projecteur, de sorte que la première plaque et la deuxième plaque soient avantageusement orientées parallèlement l'une à l'autre. On notera que par analogie la première plaque est néanmoins susceptible d'être légèrement inclinée par rapport à l'axe optique, par exemple de cinq degrés vers le bas, pour éviter les réflexions parasites, générant souvent des éblouissements.

Plus particulièrement encore, la deuxième plaque est aussi avantageusement exploitée pour acheminer les condensats par gravité à son travers vers des moyens d'évacuation d'eau équipant le boîtier. Ces moyens d'évacuation d'eau sont ceux couramment utilisés pour conférer au boîtier un caractère étanche à l'encontre d'une infiltration d'eau, tel qu'eau de ruissellement, tout en étant perméable à l'air pour autoriser une ventilation de son volume intérieur. La deuxième plaque intègre avantageusement des canaux d'acheminement des condensats à son travers vers des moyens d'évacuation d'eau équipant le boîtier.

Les canaux d'acheminement sont notamment formés d'ajours qui traversent la deuxième plaque suivant son épaisseur dans sa zone formant la paroi froide, qui est disposée en surplomb des moyens d'évacuation équipant le boîtier. Les canaux d'acheminement sont aptes à procurer une évacuation des condensats par gravité à travers la plaque, jusqu'aux moyens d'évacuation.

Préférentiellement, les moyens d'évacuation sont surplombés par la paroi froide. De telles dispositions permettent de limiter l'encombrement du dispositif, et plus particulièrement l'encombrement du compartiment dans le sens de son épaisseur.

La présente invention a aussi pour objet un projecteur de véhicule automobile intégrant un dispositif de traitement de l'humidité contenue dans ce projecteur tel qu'il vient d'être décrit.

La présente invention sera mieux comprise à la lecture de la description qui va en être faite d'exemples de réalisation, en relation avec les figures de la planche annexée, dans laquelle :
- la fig.1 est une illustration schématique d'un projecteur pour véhicule automobile intégrant le dispositif de la présente invention ;
- la fig.2 est une illustration schématique d'un projecteur pour véhicule automobile intégrant le dispositif de la présente invention selon une forme de réalisation;

Sur les figures, un projecteur pour véhicule automobile comprend un boîtier 1 qui ménage une chambre de lumière 2 et qui loge en son fond une source lumineuse 3. Cette source lumineuse 3 est en relation avec des moyens électroniques 4 pour sa mise en oeuvre, et est susceptible d'être d'un type quelconque, telle que du type à diode électroluminescente ou du type lampe à décharge par exemple. Des moyens optiques 5, tels que des réflecteurs ou analogues, sont agencés pour former un faisceau lumineux à partir de la lumière produite par la source lumineuse 3. Le boîtier 1 est muni à sa face avant d'une glace de fermeture 6 pour l'émergence de la lumière. Cette glace de fermeture 6 est un organe optique réputé fragile, et participe de la projection du faisceau lumineux suivant un axe optique A déterminé. Un compartiment 7 est ménagé à la base du boîtier 1 pour loger éventuellement divers accessoires ou moyens complémentaires utilisés pour le fonctionnement du projecteur 1. Pour éviter un accroissement conséquent de l'encombrement du projecteur, le compartiment 7 est d'une épaisseur réduite en mettant au mieux à profit ses autres dimensions. Les accessoires et moyens complémentaires étant réputés inesthétiques, un masque 8 est placé au débouché du compartiment 7 qu'il coiffe. Ce masque 8 permet d'empêcher un accès visuel aux accessoires et moyens complémentaires depuis l'extérieur du projecteur à travers la glace de fermeture 6.

L'activation de la source lumineuse 3 induit un réchauffement de l'air contenu à l'intérieur du boîtier 1. Le projecteur comporte des passages d'air qui permettent d'induire une ventilation du boîtier 1. Une telle ventilation est en outre exploitée dans la présente invention pour réduire le taux d'humidité à l'intérieur du projecteur, qui est susceptible d'être importante selon les conditions climatiques. Le boîtier 1 est aussi organisé de manière à être étanche à l'encontre d'une infiltration d'eau, telle qu'eau de ruissellement. Pour conférer au boîtier 1 son étanchéité tout en permettant sa ventilation, le projecteur est équipé de moyens de ventilation 9 adaptés, tels que dispositif à labyrinthe, à chicane ou appareillage analogue.

A cet effet, le boîtier 1 comporte une première plaque 10 thermiquement conductrice qui est en relation avec des moyens de chauffage 11 électrique et qui est disposée à la base de la glace de fermeture 6. Cette première plaque 10 s'étend dans son plan général suivant une orientation sensiblement correspondante à l'axe optique A du projecteur, et est placée en contact avec les moyens de chauffage 11 pour son réchauffement par conduction. Une activation des moyens de chauffage 11 permet de chauffer par conduction la première plaque 10, et de diffuser par rayonnement et convection la chaleur de cette dernière vers la glace de fermeture 6. Cette diffusion de chaleur est réalisée sous forme d'un balayage de la face interne de la glace de fermeture 6 pour son désembuage. L'exploitation de l'électricité comme source d'énergie permet d'activer sélectivement les moyens de chauffage 11 pour produire une chaleur adaptée à une montée rapide en température de la première plaque 10. La surface conséquente d'extension de la première plaque 10 et sa disposition à l'aplomb de la surface concave de la face interne de la glace de fermeture 6, permet un réchauffement rapide de cette dernière par rayonnement et convection. Les qualités optiques de la glace de fermeture 6 sont préservées, et les moyens de chauffage 11 sont susceptibles d'être mis en oeuvre indépendamment de l'activation simultanée de la source lumineuse 3. Le désembuage de la glace de fermeture 6 peut intervenir rapidement et efficacement, y compris lorsque la source lumineuse 3 n'est pas productrice d'une chaleur suffisante à cet effet.

La mise en oeuvre des moyens de chauffage 11 est placée sous la dépendance de moyens de commande 12 qui comprennent des moyens de temporisation pour activer sélectivement les moyens de chauffage 11 selon des durées prédéterminées et/ou des puissances adaptées et variables avant et/ou pendant et/ou après l'activation de la source lumineuse 3. Le désembuage de la glace de fermeture 6 est fiabilisé en évitant de conditionner exclusivement son obtention à l'utilisation de capteurs réputés coûteux et d'une fiabilité incertaine, et à l'exploitation de la chaleur produite par la source lumineuse 3. Plus particulièrement, les moyens de commande 12 comprennent des premiers moyens de temporisation 13 pour maintenir un désembuage de la glace de fermeture 6 pendant une première durée prédéterminée après la désactivation de la source lumineuse 3. Le véhicule étant placé en station de garage après son utilisation et la source lumineuse 3 étant en conséquence désactivée, le désembuage de la glace de fermeture 6 est maintenu pendant un instant pour dissiper toute buée susceptible de se produire sur la glace de fermeture. Les moyens de commande 12 comprennent aussi des deuxièmes moyens de temporisation 14 permettant de désembuer rapidement la glace de fermeture 6 en conséquence d'une activation de la source lumineuse 3. Les moyens de chauffage 11 sont activés pendant une deuxième durée prédéterminée à forte puissance adaptée pour provoquer un échauffement rapide de la première plaque 10. Les deuxièmes moyens de temporisation 14 sont à cet effet en relation avec des moyens de régulation 15, pour provoquer une activation des moyens de chauffage 11 à forte puissance pendant la deuxième durée, puis pour les maintenir si besoin activés à puissance modérée jusqu'à désactivation de la source lumineuse 3 et/ou après épuisement de la première durée. L'activation et la désactivation des moyens de chauffage sont néanmoins susceptibles d'être en outre placées sous la dépendance d'autres moyens de mesure, tels que des capteurs d'humidité et/ou de température par exemple.

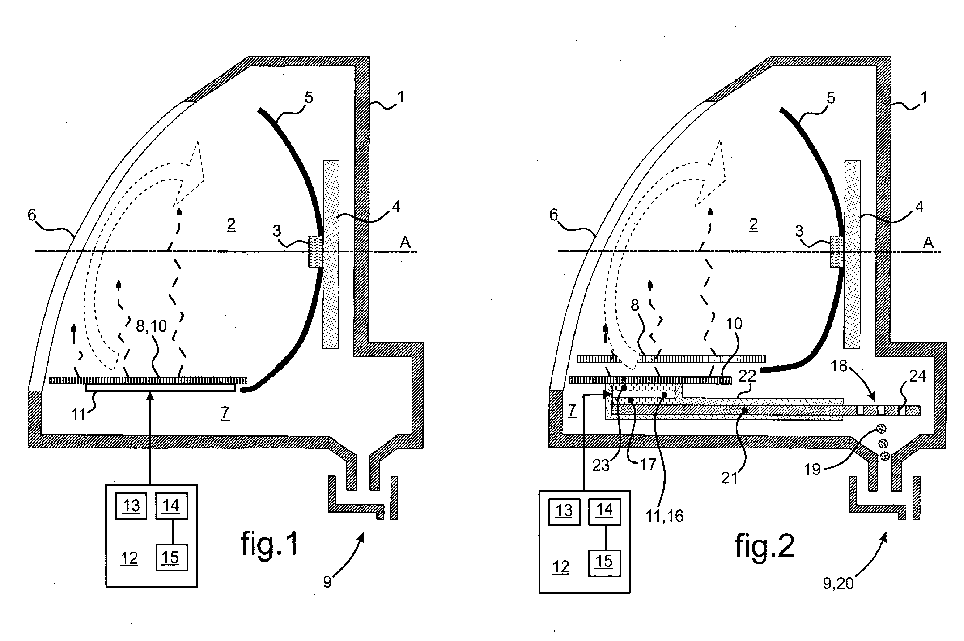

Sur la fig.1 la première plaque 10 est constituée au moins en partie par le masque 8, tandis que sur la fig.2 la première plaque 10 est une plaque spécifiquement dédiée qui est disposée sous le masque 8. Le matériau constitutif de la première plaque 10 est par exemple un métal, tel qu'aluminium, ou encore un matériau plastique susceptible d'être chargé de particules métalliques. De tels matériaux favorisent un réchauffement rapide de la première plaque 10 et la diffusion par rayonnement de sa chaleur vers la glace de fermeture 6. Dans le cas où le masque 8 est constitutif de la première plaque 10, les matériaux constitutifs de la première plaque et donc du masque ont en plus la propriété de ne pas affecter le caractère esthétique du masque, par exemple un matériau plastique susceptible d'être chargé de particules métalliques ayant un aspect métallisé ou coloré.

Sur la fig.2, les moyens de chauffage 11 sont constitués par la face chaude 23 d'une unité thermoélectrique 16 à effet PELTIER. Le réchauffement de la première plaque 10 peut intervenir rapidement et efficacement pour une consommation d'énergie limitée. En outre, la rentabilité de cette consommation d'énergie peut être optimisée en exploitant la face froide 17 de l'unité thermoélectrique 16 pour former une paroi froide 18. Cette paroi froide 18 permet d'induire une condensation de l'humidité présente à l'intérieur du boîtier 1. Les condensats 19 sont évacués vers des moyens d'évacuation d'eau 20, qui sont constitutifs des moyens de ventilation 9 dédiés à l'étanchéité à l'eau et à la perméabilité à l'air du boîtier 1.

Plus particulièrement, une deuxième plaque 21 thermiquement conductrice est en relation, par contact notamment, avec la face froide 17 de l'unité thermoélectrique 16. Cette deuxième plaque 21 est par exemple une plaque métallique, ou encore une enveloppe métallique contenant un fluide caloporteur, tel qu'alcool ou fluide analogue, par exemple un caloduc. La deuxième plaque 21 est orientée dans son plan général sensiblement parallèle avec l'axe optique A, pour éviter d'accroître l'épaisseur du compartiment 7, préférentiellement orientée de cinq degrés vers le bas par rapport à l'axe optique A. Pour éloigner la paroi froide 18 de la première plaque 10, l'unité thermoélectrique 16 et la deuxième plaque 21 sont logées à l'intérieur d'une enceinte 22 dont les parois sont thermiquement isolantes. La face chaude 23 de l'unité thermoélectrique 16 est en contact avec la première plaque 10 à travers une ouverture ménagée dans l'enceinte 22 et fermée par la première plaque 10. L'une des extrémités de la deuxième plaque 21 est en contact avec la face froide 17 de l'unité thermoélectrique 16, tandis que son autre extrémité émerge hors de l'enceinte 22 pour former la paroi froide 18. Les condensats 19 sont évacués par gravité vers les moyens d'évacuation 20, en étant acheminés par des canaux 24 formés d'ajours qui sont ménagés à travers l'épaisseur de la deuxième plaque 21, dans sa zone formant paroi froide 18, en étant disposés en surplomb des moyens d'évacuation 20.

Bien que la figure 2 représente un masque 8 distinct de la première plaque de chauffage 10, il est possible selon une variante de réalisation d'avoir une première plaque chauffante constituée au moins en partie par un masque, tel que cela est représenté en figure 1, tout en conservant l'unité thermoélectrique 16 associée à ce masque chauffant 8, 10, de la même manière que l'unité thermoélectrique est associée à la première plaque chauffante 10 sur la figure 2.

## Revendications

1. Dispositif de traitement de l'humidité à l'intérieur d'un projecteur de véhicule automobile, le projecteur comprenant un boîtier (1) ménageant une chambre (2) logeant au moins une source lumineuse (3) et un compartiment (7), une glace de fermeture (6) fermant ledit boîtier, un masque (8) étant disposé à proximité de la glace de fermeture (6) et coiffant le compartiment (7), le dispositif comprenant des moyens de chauffage électrique (11) qui sont aptes à réchauffer la glace de fermeture (6) et dont la mise en oeuvre est placée sous la dépendance de moyens de commande (12), **caractérisé en ce que** le compartiment (7) loge les moyens de chauffage (11), qui sont en relation avec une première plaque (10) thermiquement conductrice placée à proximité de la glace de fermeture (6), de manière à ce que la face interne de la glace de fermeture (6) est balayée par un courrant de chaleur en provenance de la première plaque (10) réchauffée par les moyens de chauffage électrique (11), **en ce que** lesdits moyens de chauffage électriques (11) sont aptes à être activés indépendamment de ladite source lumineuse, et **en ce que** les moyens de chauffage (11) sont constitués d'au moins une unité thermoélectrique (16) à effet PELTIER dont la face chaude (23) est exploitée et est en relation avec la première plaque (10).

2. Dispositif selon la revendication 1, **caractérisé en ce que** ledit compartiment (7) est agencé à la base du boîtier (1) en contrebas de ladite glace de fermeture (6), ledit masque (8) étant disposé à la base de la glace de fermeture (6), et ladite première plaque (10) thermiquement conductrice étant placée à la base de la glace de fermeture (6), de sorte que la face interne de la glace de fermeture (6) est balayée par un courrant de chaleur de convection ascendant.

3. Dispositif selon la revendication 1 ou 2, **caractérisé en ce que** la première plaque (10) est constituée du masque (8) ou d'une plaque spécifiquement dédiée disposée sous le masque (8).

4. Dispositif selon l'une quelconque des revendications précédentes, **caractérisé en ce que** les moyens de commande comprennent des premiers moyens de temporisation (13) aptes à maintenir voire provoquer l'activation des moyens de chauffage (11) pendant une première durée prédéterminée postérieure à la désactivation de la source lumineuse (3).

5. Dispositif selon l'une quelconque des revendications précédentes, **caractérisé en ce que** les moyens de commande (11) comprennent des deuxièmes moyens de temporisation (14) aptes à provoquer voire maintenir l'activation des moyens de chauffage (11) en conséquence d'une activation de la source lumineuse (3).

6. Dispositif selon la revendication 5, **caractérisé en ce que** les deuxièmes moyens de temporisation (14) sont associés à des moyens de régulation (15) aptes à activer les moyens de chauffage (11) à forte puissance pendant une deuxième durée prédéterminée.

7. Dispositif selon l'une des revendications précédentes, **caractérisé en ce que** la face froide (17) de l'unité thermoélectrique (16) est exploitée et est en relation avec une deuxième plaque (21) thermiquement conductrice, qui forme au moins partiellement une paroi froide (18) apte à provoquer une condensation à sa surface.

8. Dispositif selon la revendication 7, **caractérisé en ce que** la deuxième plaque (21) est formée indifféremment d'une masse métallique ou d'une enveloppe logeant un fluide caloporteur.

9. Dispositif selon l'une quelconque des revendications 7 à 8, **caractérisé en ce que** la deuxième plaque (21) intègre des canaux (24) d'acheminement des condensats (19) à son travers vers des moyens d'évacuation d'eau (20) équipant le boîtier (1).

10. Dispositif selon la revendication 9, **caractérisé en ce que** les canaux (24) sont formés d'ajours qui traversent la deuxième plaque (21) suivant son épaisseur dans sa zone formant la paroi froide (18).

11. Dispositif selon l'une quelconque des revendications 7 à 10, **caractérisé en ce que** la zone formant la paroi froide (18) est disposée en surplomb de moyens d'évacuation (20) équipant le boîtier (1).

12. Dispositif selon l'une quelconque des revendications précédentes, **caractérisé en ce que** l'unité thermoélectrique (16) est logée à l'intérieur d'une enceinte (22) dont les parois sont thermiquement isolantes, sa face chaude (23) étant placée au débouché d'une ouverture de l'enceinte (22) qui est fermée par la première plaque (10).

13. Dispositif selon la revendication 12 prise en combinaison avec la revendication 7 ou 8, **caractérisé en ce qu'**une première zone de la deuxième plaque (21) est logée entre des parois de l'enceinte (22) tandis que la paroi froide (18) émerge hors de l'enceinte (22).

14. Projecteur de véhicule automobile intégrant un dispositif de traitement de l'humidité qu'il contient selon l'une quelconque des revendications précédentes.

## Patentansprüche

1. Vorrichtung zur Behandlung von Feuchtigkeit im Inneren eines Kraftfahrzeugscheinwerfers, wobei der Scheinwerfer umfasst: ein Gehäuse (1), in dem eine wenigstens eine Lichtquelle (3) beherbergende Kammer (2) und ein Abteil (7) ausgebildet sind, eine das Gehäuse verschließende Abdeckscheibe (6), eine Blende (8), die in der Nähe der Abdeckscheibe (6) angeordnet ist und das Abteil (7) bedeckt, wobei die Vorrichtung elektrische Heizmittel (11) aufweist, die die Abdeckscheibe (6) zu erwärmen vermögen und deren Einsatz Steuermitteln (12) unterliegt, **dadurch gekennzeichnet, dass** das Abteil (7) die Heizmittel (11) beherbergt, die mit einer in der Nähe der Abdeckscheibe (6) angeordneten, thermisch leitenden ersten Platte (10) in Verbindung stehen, derart, dass über die Innenseite der Abdeckscheibe (6) ein Wärmestrom streicht, der von der ersten Platte (10) stammt, die durch die elektrischen Heizmittel (11) erwärmt wird, dass die elektrischen Heizmittel (11) unabhängig von der Lichtquelle aktiviert zu werden vermögen, und dass die Heizmittel (11) von wenigstens einer thermoelektrischen PELTIER-Einheit (16) gebildet sind, deren Heißseite (23) genutzt wird und mit der ersten Platte (10) in Verbindung steht.

2. Vorrichtung nach Anspruch 1,
**dadurch gekennzeichnet, dass** das Abteil (7) an der Basis des Gehäuses (1) unterhalb der Abdeckscheibe (6) ausgebildet ist, wobei die Blende (8) an der Basis der Abdeckscheibe (6) angeordnet ist, und wobei die thermisch leitende erste Platte (10) an der Basis der Abdeckscheibe (6) platziert ist, derart, dass über die Innenseite der Abdeckscheibe (6) ein aufsteigender Konvektionswärmestrom streicht.

3. Vorrichtung nach Anspruch 1 oder 2,
**dadurch gekennzeichnet, dass** die erste Platte (10) von der Blende (8) oder einer unter der Blende (8) angeordneten, speziell hierfür vorgesehenen Platte gebildet ist.

4. Vorrichtung nach einem der vorhergehenden Ansprüche,
**dadurch gekennzeichnet, dass** die Steuermittel erste Verzögerungsmittel (13) aufweisen, die in der Lage sind, die Aktivierung der Heizmittel (11) für die Dauer einer ersten vorbestimmten Zeit nach Ausschalten der Lichtquelle (3) beizubehalten oder sogar herbeizuführen.

5. Vorrichtung nach einem der vorhergehenden Ansprüche,
**dadurch gekennzeichnet, dass** die Steuermittel (11) zweite Verzögerungsmittel (14) aufweisen, die in der Lage sind, die Aktivierung der Heizmittel (11) als Folge eines Einschaltens der Lichtquelle (3) herbeizuführen oder beizubehalten.

6. Vorrichtung nach Anspruch 5,
**dadurch gekennzeichnet, dass** die zweiten Verzögerungsmittel (14) Regelungsmitteln (15) zugeordnet sind, die die Heizmittel (11) für die Dauer einer zweiten vorbestimmten Zeit mit hoher Leistung zu aktivieren vermögen.

7. Vorrichtung nach einem der vorhergehenden Ansprüche,
**dadurch gekennzeichnet, dass** die Kaltseite (17) der thermoelektrischen Einheit (16) genutzt wird und mit einer thermisch leitenden zweiten Platte (21) in Verbindung steht, die wenigstens teilweise eine Kaltwand (18) bildet, die eine Kondensation auf ihrer Oberfläche zu bewirken vermag.

8. Vorrichtung nach Anspruch 7,
**dadurch gekennzeichnet, dass** die zweite Platte (21) aus einer Metallmasse oder einer ein Wärmeübertragungsmedium aufnehmenden Umhüllung gebildet ist.

9. Vorrichtung nach einem der Ansprüche 7 bis 8,
**dadurch gekennzeichnet, dass** in der zweiten Platte (21) Kanäle (24) integriert sind, um durch diese hindurch Kondensat (19) zu Wasserableitungsmitteln (20) zu transportieren, mit denen das Gehäuse (1) ausgestattet ist.

10. Vorrichtung nach Anspruch 9,
**dadurch gekennzeichnet, dass** die Kanäle (24) von Durchbrüchen gebildet sind, die die zweite Platte (21) ihrer Dicke nach in ihrem die Kaltwand (18) bildenden Bereich durchqueren.

11. Vorrichtung nach einem der Ansprüche 7 bis 10,
**dadurch gekennzeichnet, dass** der die Kaltwand (18) bildende Bereich über den Ableitungsmittel (20) liegend angeordnet ist, mit denen das Gehäuse (1) versehen ist.

12. Vorrichtung nach einem der vorhergehenden Ansprüche,
**dadurch gekennzeichnet, dass** die thermoelektrische Einheit (16) innen in einem geschlossenen Raum (22) aufgenommen ist, dessen Wände thermisch isolierend sind, wobei die Heißseite (23) an der Einmündung einer Öffnung des geschlossenen Raums (22) platziert ist, die durch die erste Platte (10) geschlossen ist.

13. Vorrichtung nach Anspruch 12 in Verbindung mit Anspruch 7 oder 8,
**dadurch gekennzeichnet, dass** ein erster Bereich der zweiten Platte (21) zwischen Wänden des geschlossenen Raums (22) aufgenommen ist, während die Kaltwand (18) aus dem geschlossenen Raum (22) herausragt.

14. Kraftfahrzeugscheinwerfer mit einer Vorrichtung zur Behandlung der Feuchtigkeit, der diese nach einem der vorstehenden Ansprüche umfasst.

## Claims

1. Device for treating moisture inside a motor vehicle headlight, the headlight comprising a housing (1) forming a chamber (2) containing at least one light source (3) and a compartment (7), a closure glass (6) closing said housing, a mask (8) being disposed in proximity to the closure glass (6) and covering the compartment (7), the device including electric heating means (11) which are designed to heat the closure glass (6) and the operation of which is made dependent on control means (12), **characterised in that** the compartment (7) houses the heating means (11), which are in relation with a first thermally conductive plate (10) placed in proximity to the closure glass (6), so that the inner face of the closure glass (6) is swept by a current of heat originating from the first plate (10) heated by the electric heating means (11), **in that** said electric heating means (11) are designed to be activated independently of said light source, and **in that** the heating means (11) are composed of at least one PELTIER-effect thermoelectric unit (16) of which the hot face (23) is utilised and is in relation with the first plate (10).

2. Device according to claim 1, **characterised in that** said compartment (7) is arranged at the base of the housing (1) below said closure glass (6), said mask (8) being disposed at the base of the closure glass (6), and said first thermally conductive plate (10) being placed at the base of the closure glass (6), so that the inner face of the closure glass (6) is swept by an ascending current of convection heat.

3. Device according to claim 1 or 2, **characterised in that** the first plate (10) is composed of the mask (8) or of a specifically dedicated plate disposed under the mask (8).

4. Device according to any one of the preceding claims, **characterised in that** the control means comprise first timer means (13) designed to maintain or cause the activation of the heating means (11) for a first predetermined duration after deactivation of the light source (3).

5. Device according to any one of the preceding claims, **characterised in that** the control means (11) comprise second timer means (14) designed to cause or maintain the activation of the heating means (11) following an activation of the light source (3).

6. Device according to claim 5, **characterised in that** the second timer means (14) are associated with control means (15) designed to activate the heating means (11) at high power for a second predetermined duration.

7. Device according to one of the preceding claims, **characterised in that** the cold face (17) of the thermoelectric unit (16) is utilised and is in relation with a second thermally conductive plate (21) which forms at least partially a cold wall (18) designed to produce condensation at its surface.

8. Device according to claim 7, **characterised in that** the second plate (21) is formed equally well by a metallic mass or an enclosure containing a heat-carrying fluid.

9. Device according to any one of claims 7 to 8, **characterised in that** the second plate (21) incorporates channels (24) for conveying condensate (19) therethrough to water drainage means (20) provided on the housing (1).

10. Device according to claim 9, **characterised in that** the channels (24) are formed by perforations which pass through the thickness of the second plate (21) in the zone forming the cold wall (18).

11. Device according to any one of claims 7 to 10, **characterised in that** the zone forming the cold wall (18) is disposed above the drainage means (20) provided on the housing (1).

12. Device according to any one of the preceding claims, **characterised in that** the thermoelectric unit (16) is housed inside a chamber (22) of which the walls are thermally insulating, its hot face (23) being placed at the outlet of an opening in the chamber (22) which is closed by the first plate (10).

13. Device according to claim 12 taken in combination with claim 7 or 8, **characterised in that** a first zone of the second plate (21) is located between walls of the chamber (22) while the cold wall (18) emerges from the chamber (22).

14. Motor vehicle headlight incorporating a device for treating moisture contained therein according to any one of the preceding claims.
